# EUROPÄISCHE PATENTSCHRIFT

(11) **EP 3 586 042 B1**
(45) Veröffentlichungstag und Bekanntmachung des Hinweises auf die Patenterteilung: **23.09.2020**
(21) Anmeldenummer: 17823119.7
(22) Anmeldetag: 20.12.2017
(51) Int. Cl.: F16H 57/04, F02B 77/11

(54) **VERFAHREN UND SYSTEM ZUM REGELN EINER TEMPERATUR EINES BAUTEILS EINES FAHRZEUGS**
METHOD AND SYSTEM FOR REGULATING A TEMPERATURE OF A COMPONENT OF A VEHICLE
PROCÉDÉ ET SYSTÈME POUR RÉGULER UNE TEMPÉRATURE D'UNE PIÈCE D'UN VÉHICULE

(30) Priorität: 22.02.2017 DE 102017202815
(43) Veröffentlichungstag der Anmeldung: 01.01.2020
(73) Patentinhaber: Audi AG, 85045 Ingolstadt (DE)
(72) Erfinder: KOPP, Andreas, 85092 Kösching (DE)
(86) Internationale Anmeldenummer: PCT/EP2017/083839
(87) Internationale Veröffentlichungsnummer: WO 2018/153534

(56) Entgegenhaltungen:
- DE-A1- 10 328 680
- DE-A1-102009 036 547
- DE-A1-102011 120 748

## Beschreibung

Die vorgestellte Erfindung betrifft ein Verfahren zum Regeln einer Temperatur eines Bauteils eines Fahrzeugs und ein Temperaturregelsystem.

Um thermische Verluste an Antriebsstrangkomponenten, wie bspw. einem Motor oder einem Getriebe während einer Aufwärmphase zu minimieren, werden thermische Isolationen, bspw. in Form von thermischen Kapselungen direkt auf die Antriebsstrangkomponenten aufgebracht, wodurch die Antriebsstrangkomponenten schneller einen wirkungsgradoptimalen Bereich erreichen als es ohne die thermischen Kapselungen möglich ist.

Die Antriebsstrangkomponenten erzeugen in Abhängigkeit einer bereitgestellten Antriebslast Verlustleistungen, die als Wärme an eine Umgebung abgegeben werden müssen, um Schäden durch Überhitzung zu vermeiden. Beim Betrieb eines Fahrzeugs kann es zu Situationen kommen, in denen eine Wärmeabfuhr mittels eines Fluidkühlungssystems nur unzureichend erfolgt, so dass die Antriebsstrangkomponenten auf eine Kühlung mittels bspw. durch Fahrtwind angeblasener Oberflächen angewiesen sind. Um eine Überhitzung der Antriebsstrangkomponenten zu vermeiden, werden nur vereinzelt und nur zu einem geringen Anteil an einer Gesamtoberfläche jeweilige Teilbereiche einer Antriebsstrangkomponente mit einer thermischen Kapselung umgeben. Jeweilige nicht mit thermischen Kapselungen umgebene Teilbereiche der Antriebsstrangkomponenten führen jedoch zu einem verzögerten Erreichen des wirkungsgradoptimalen Bereichs während der Aufwärmphase.

Die deutsche Druckschrift DE 103 28 680 A1 offenbart eine Vorrichtung zur Wärme- und/oder Schallisolierung, bei der ein Luftpolster zwischen einem Bauteil und einer Trägerschicht durch eine Verstellung mehrerer Dämmelemente der Trägerschicht veränderbar ist.

In der deutschen Druckschrift DE 10 2008 003 721 B1 wird ein Hitzeschild für ein Fahrzeug offenbart, das dazu konfiguriert ist, von einer Heizstellung, in der ein Bereich zwischen einer Wärme abgebenden Einrichtung und einer zu beheizenden Einrichtung durchlässig für Wärmestrahlung ist, in eine Abschirmstellung, in der das Hitzeschild zwischen der Wärme abgebenden Einrichtung und der zu beheizenden Einrichtung angeordnet ist, bewegt zu werden.

Vor diesem Hintergrund war es eine Aufgabe der vorgestellten Erfindung, ein thermisches Isolationselement bereitzustellen, das ein Bauteil eines Fahrzeugs während einer Aufwärmphase gegen eine Umgebung thermisch isoliert und während einer Betriebsphase eine Kühlung des Bauteils durch das Bauteil anströmendes Umgebungsmedium ermöglicht.

Zur Lösung der voranstehend genannten Aufgabe wird ein Verfahren zum Regeln einer Temperatur mindestens eines Bauteils eines Fahrzeugs vorgestellt, bei dem mindestens ein Isolationselement zum thermischen Isolieren des mindestens einen Bauteils gegenüber einer Umgebung des mindestens einen Bauteils in Abhängigkeit eines aktuellen Zustands des Fahrzeugs von einer ersten Position in mindestens eine zweite Position oder von der mindestens einen zweiten Position in die erste Position bewegt wird. Dabei ist vorgesehen, dass das mindestens eine Isolationselement in der ersten Position das mindestens eine Bauteil vollständig kontaktiert, und das mindestens eine Isolationselement in der mindestens einen zweiten Position vollständig beabstandet von dem mindestens einen Bauteil ist und ein vollständiges Umströmen des mindestens einen Bauteils ermöglicht.

Ausgestaltungen der vorgestellten Erfindung ergeben sich aus der Beschreibung und den abhängigen Ansprüchen.

Das vorgestellte Verfahren dient insbesondere zum dynamischen, d. h. in Abhängigkeit eines Zustands eines jeweiligen Fahrzeugs veränderlichen, thermischen Isolieren mindestens eines Bauteils eines Fahrzeugs gegenüber einer Umgebung. Dazu ist vorgesehen, dass ein jeweiliges thermisches Isolationselement, d. h. ein Isolationselement aus bspw. Polyurethanschaum, in Abhängigkeit eines aktuellen Zustands des Fahrzeugs von einer ersten Position in eine zweite Position, oder umgekehrt von der zweiten Position in die erste Position, bewegt wird. Dabei ist vorgesehen, dass das thermische Isolationselement ein jeweiliges Bauteil des Fahrzeugs in der ersten Position vollständig kontaktiert, so dass das Bauteil zumindest in dem vorgegebenen Bereich von einer Umgebung thermisch isoliert wird und sich in einer Aufwärmphase des Fahrzeugs schneller erwärmt als ein Bauteil, das nicht von einem Isolationselement kontaktiert wird.

Durch eine Kontaktierung eines jeweiligen Bauteils und eines jeweiligen Isolationselements wird ein Anströmen des Bauteils mit Umgebungsmedium, d. h. insbesondere mit Fahrtwind, im Bereich der Kontaktierung vermieden, so dass in dem Bauteil erzeugte Wärmeenergie größtenteils in dem Bauteil verbleibt und nicht von dem Umgebungsmedium abgeführt wird. Dies führt insbesondere während einer Aufwärmphase zu einem schnellen Erwärmen des Bauteils und entsprechend zu einem schnellen Erreichen einer optimalen Betriebstemperatur des Bauteils, wodurch eine Betriebsdauer in Betriebspunkten, in denen das Bauteil nicht optimal bzw. nicht mit einer größtmöglichen Effizienz arbeitet, reduziert wird. Entsprechend führt das vorgestellte Verfahren zu einer gegenüber dem Stand der Technik höheren Effizienz der Bauteile eines Fahrzeugs, insbesondere einer Brennkraftmaschine eines Fahrzeugs.

Unter einer vollständigen Kontaktierung eines vorgegebenen Bereichs eines jeweiligen Bauteils durch das erfindungsgemäß vorgesehene thermische Isolationselement ist im Kontext der vorliegenden Erfindung ein komplettes Anliegen in dem vorgegebenen Bereich, d. h. im Falle eines flächigen Isolationselements, ein Anliegen des flächigen Isolationselements über eine komplette Fläche des vorgegebenen Bereichs hinweg, zu verstehen.

Durch eine Beabstandung eines jeweiligen Isolationselements von einem jeweiligen Bauteil kann das Bauteil von einem Umgebungsmedium, wie bspw. Fahrtwind bzw. Luft, angeströmt werden, so dass in dem Bauteil erzeugte Wärmeenergie von dem Umgebungsmedium abgeführt und ein weiteres Erwärmen des Bauteils verhindert werden kann. Insbesondere bei hohen Belastungen von Bauteilen, wie bspw. während einer Fahrt nach einer Aufwärmphase, kann es zu Situationen bzw. Zuständen kommen, in denen eine Kühlung eines Bauteils mittels eines Flüssigkeitskühlsystems nicht ausreicht, um eine aktuelle Temperatur eines Bauteils zu senken oder zu stabilisieren. In derartigen Situationen bzw. Zuständen ist eine zusätzliche Kühlung des Bauteils durch ein Umgebungsmedium zwingend erforderlich, um eine Beschädigung des Bauteils aufgrund von Überhitzung zu verhindern.

Um ein jeweiliges Bauteil eines Fahrzeugs dann thermisch zu isolieren, wenn sich das Bauteil erwärmen soll und das Bauteil zu kühlen, wenn sich das Bauteil über einen kritischen Punkt hinweg erwärmt hat, ist in Ausgestaltung des vorgestellten Verfahrens insbesondere vorgesehen, dass ein zum thermischen Isolieren des Bauteils vorgesehenes Isolationselement während einer Aufwärmphase des Bauteils in eine erste Position bewegt wird, in der das Isolationselement das Bauteil kontaktiert. Weiterhin ist vorgesehen, dass, wenn sich das Bauteil oder das Fahrzeug bzw. ein Kühlmittel des Fahrzeugs über einen kritischen bzw. vorgegebenen Punkt hinweg erwärmt hat, das Isolationselement in eine zweite Position bewegt wird, in der das Isolationselement vollständig beabstandet von dem Bauteil ist.

Zur Feststellung eines Zustands, in dem ein Isolationselement bspw. von einer ersten Position in eine zweite Position bewegt werden soll, kann eine Temperatur eines jeweiligen Bauteils, eine Temperatur eines Antriebs eines jeweiligen Fahrzeugs oder eine Kühlmitteltemperatur des Fahrzeugs bspw. mittels eines Temperatursensors oder einem mathematischen Modell ermittelt und mit einem vorgegebenen Schwellenwert abgeglichen werden. Dies bedeutet, dass das Isolationselement bspw. dann von der ersten Position in die zweite Position bewegt wird, wenn eine Temperatur des Bauteils oder ausgewählter Bauteile des Fahrzeugs den vorgegebenen Schwellenwert übersteigt.

Es ist insbesondere vorgesehen, dass ein jeweiliges Isolationselement dann bewegt wird, d. h. von einer ersten Position in eine zweite Position oder umgekehrt von der zweiten Position in die erste Position bewegt wird, wenn ein vorgegebener Zustand eines entsprechenden Fahrzeugs erkannt wird. Dazu können jeweilige Zustände des Fahrzeugs bspw. in einer Zuordnungstabelle hinterlegt sein, die verschiedenen von mindestens einem Sensor oder Zähler zu ermittelnden Werten jeweilige Zustände zuordnet. So kann bspw. vorgesehen sein, dass, wenn einer Zähler, der eine Betriebsdauer des Fahrzeugs erfasst, einen Wert unterhalb von 10 Minuten ausgibt, ein Zustand "Aufwärmphase" erkannt und das Isolationselement in die erste Position bewegt wird. Weiterhin kann vorgesehen sein, dass, wenn der Zähler einen Wert oberhalb von 10 Minuten ausgibt, ein Zustand "Kühlbetrieb" erkannt und das Isolationselement in die zweite Position bewegt wird. Selbstverständlich ist es auch denkbar, dass ein Zustand, in dem das erfindungsgemäß vorgesehene mindestens eine Isolationselement zu bewegen ist, in Abhängigkeit von bspw. einer aktuellen Geschwindigkeit des Fahrzeugs, einer aktuellen Drehzahl oder jedem weiteren technisch zum Erkennen eines thermischen Zustands bzw. eines Zustands des Fahrzeugs geeigneten Maß, erkannt wird.

In einer möglichen Ausgestaltung des vorgestellten Verfahrens ist vorgesehen, dass das mindestens eine Isolationselement in der mindestens einen zweiten Position einen Luftleitpfad bildet, entlang dessen das mindestens eine Isolationselement anströmende Luft bspw. radial um das mindestens eine Bauteil herum geleitet wird.

Um ein möglichst effizientes Abkühlen eines jeweiligen Bauteils zu ermöglichen, wenn ein jeweiliges Isolationselement in eine zweite Position, in der das Isolationselement vollständig beabstandet von dem Bauteil vorliegt, bewegt wurde, kann vorgesehen sein, dass das Isolationselement einen Luftleitpfad bildet. Mittels eines Luftleitpfades, der bspw. mittels Ausnehmungen und/oder Leitstrukturen an dem Isolationselement und/oder dem Bauteil gebildet wird, kann ein anströmendes Medium, wie bspw. Fahrtwind, in einer thermisch günstigen Weise um das Bauteil herum bzw. an dem Bauteil entlang geleitet werden, so dass das Bauteil insbesondere an thermisch relevanten Stellen mit Umgebungsmedium umströmt wird. Es ist denkbar, dass der Luftleitpfad derart ausgebildet ist, dass das anströmende Umgebungsmedium von einer turbulenten Bewegung in eine laminare Bewegung oder umgekehrt das anströmende Umgebungsmedium von einer laminaren Bewegung in eine turbulente Bewegung überführt wird.

In einer weiteren möglichen Ausgestaltung des vorgestellten Verfahrens ist vorgesehen, dass das mindestens eine Isolationselement mittels eines Aktuators von der ersten Position in die mindestens eine zweite Position oder von der mindestens einen zweiten Position in die erste Position bewegt wird.

Unter Verwendung eines Aktuators, wie bspw. einem Elektromotor, einem Scherensystem oder einem Längssteller bzw. Quersteller mit Drehpunkt, kann ein jeweiliges Isolationselement sehr genau und automatisch von einer jeweiligen ersten Position in eine zweite Position bzw. von einer zweiten Position in eine erste Position bewegt werden. Dazu kann ein jeweiliger Aktuator von einem Steuergerät angesteuert werden, das dazu konfiguriert ist, einen aktuellen Zustand eines entsprechenden Fahrzeugs zu erfassen. Es ist denkbar, dass der Aktuator durch beim Sieden eines Kühlmittels erzeugten Dampf angetrieben wird, um ein entsprechendes Bauteil automatisch zu kühlen, wenn dessen Kühlmittel siedet.

In einer weiteren möglichen Ausgestaltung des vorgestellten Verfahrens ist vorgesehen, dass ein Abstand zwischen dem mindestens einen Isolationselement und dem mindestens einen Bauteil in Abhängigkeit des aktuellen Zustands des Fahrzeugs dynamisch eingestellt wird.

Um eine Temperatur eines jeweiligen Bauteils zu regulieren, kann vorgesehen sein, dass ein Abstand zwischen dem mindestens einen Isolationselement und dem mindestens einen Bauteil in Abhängigkeit eines aktuellen Zustands eines jeweiligen Fahrzeugs, d. h. insbesondere in Abhängigkeit einer aktuellen Temperatur des mindestens einen Bauteils oder einer Kühlmitteltemperatur eines Antriebs des Fahrzeugs, dynamisch eingestellt wird. Dies bedeutet, dass das Isolationselement bspw. bei einer Erwärmung des Bauteils linear oder in jedem weiteren mathematischen Verhältnis zu einem Verlauf einer Temperatur des Bauteils von dem Bauteil weg bewegt wird. Selbstverständlich kann es auch vorgesehen sein, dass das Isolationselement bspw. bei einer Abkühlung des Bauteils linear oder in jedem weiteren mathematischen Verhältnis zu einem Verlauf einer Temperatur des Bauteils zu dem Bauteil hin bewegt wird. Entsprechend ist vorgesehen, dass sich der Abstand des Isolationselements zu dem Bauteil dynamisch mit bspw. einer Temperatur des Bauteils ändert.

In einer weiteren möglichen Ausgestaltung des vorgestellten Verfahrens ist vorgesehen, dass das mindestens eine Isolationselement aus einem Material der folgenden Liste an Materialien oder einer Kombination daraus besteht: Schaum, Kunststoff, Metall, Gummi oder Polyurethan.

Das erfindungsgemäß vorgesehene Isolationselement kann insbesondere aus einer Trägerschicht aus bspw. einem Metall bestehen, auf der eine Isolationsschicht aus bspw. Polyurethanschaum aufgetragen ist. An der Trägerschicht oder der Isolationsschicht kann ein Eingriff, wie bspw. eine Aufnahme für einen Aktuator vorgesehen sein, mittels dessen das Isolationselement von einer ersten Position in mindestens eine zweite Position und umgekehrt zu bewegen ist.

Das vorgestellte Verfahren dient insbesondere zum Regeln einer Temperatur einer Antriebsstrangkomponente eines Fahrzeugs, wie bspw. einem Antrieb und/oder einem Getriebe, und/oder einem Differential und/oder einem Radlagerträger. Selbstverständlich kann auch vorgesehen sein, dass eine Temperatur eines kompletten Antriebsstrangs oder jedes weiteren Bauteils bzw. jeder weiteren Bauteilanordnung eines Fahrzeugs mittels des vorgestellten Verfahrens geregelt wird.

Ferner betrifft die vorliegende Erfindung ein Temperaturregelsystem zum Regeln einer Temperatur mindestens eines Bauteils eines Fahrzeugs, mit mindestens einem Isolationselement zum thermischen Isolieren des mindestens einen Bauteils gegenüber einer Umgebung des Bauteils, mindestens einem Aktuator zum Bewegen des mindestens einen Isolationselements von einer ersten Position in mindestens eine zweite Position oder von der mindestens einen zweiten Position in die erste Position, und einem Steuergerät. Es ist vorgesehen, dass das Steuergerät dazu konfiguriert ist, den mindestens einen Aktuator in Abhängigkeit eines aktuellen Zustands des Fahrzeugs anzusteuern. Weiterhin ist vorgesehen, dass das mindestens eine Isolationselement in der ersten Position das mindestens eine Bauteil zumindest in einem vorgegebenen Bereich vollständig kontaktiert, und das mindestens eine Isolationselement in der mindestens einen zweiten Position vollständig beabstandet von dem mindestens einen Bauteil ist und das vollständige Umströmen des Bauteils ermöglicht.

Weiterhin ist vorgesehen, dass der mindestens eine Aktuator ein Elektromotor, ein Scherensystem oder ein Längssteller mit Drehpunkt ist. Das vorgestellte Temperaturregelsystem dient insbesondere zur Durchführung des vorgestellten Verfahrens.

Weitere Vorteile und Ausgestaltungen der Erfindung ergeben sich aus der Beschreibung und den beiliegenden Zeichnungen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt eine mögliche Ausgestaltung des erfindungsgemäßen Temperaturregelsystems an einem eckigen Getriebe, bei dem thermische Isolationselemente in einer ersten Position an dem Getriebe angeordnet sind.
Figur 2 zeigt das Temperaturregelsystem aus Figur 1 in einem Zustand, bei dem die thermischen Isolationselemente in eine zweite Position bewegt wurden.
Figur 3 zeigt eine weitere mögliche Ausgestaltung des erfindungsgemäßen Temperaturregelsystems an einer ovalen Antriebsstrangkomponente, bei dem thermische Isolationselemente in einer ersten Position an der Antriebsstrangkomponente angeordnet sind.
Figur 4 zeigt das Temperaturregelsystem aus Figur 3 in einem Zustand, bei dem die thermischen Isolationselemente in eine zweite Position bewegt wurden.

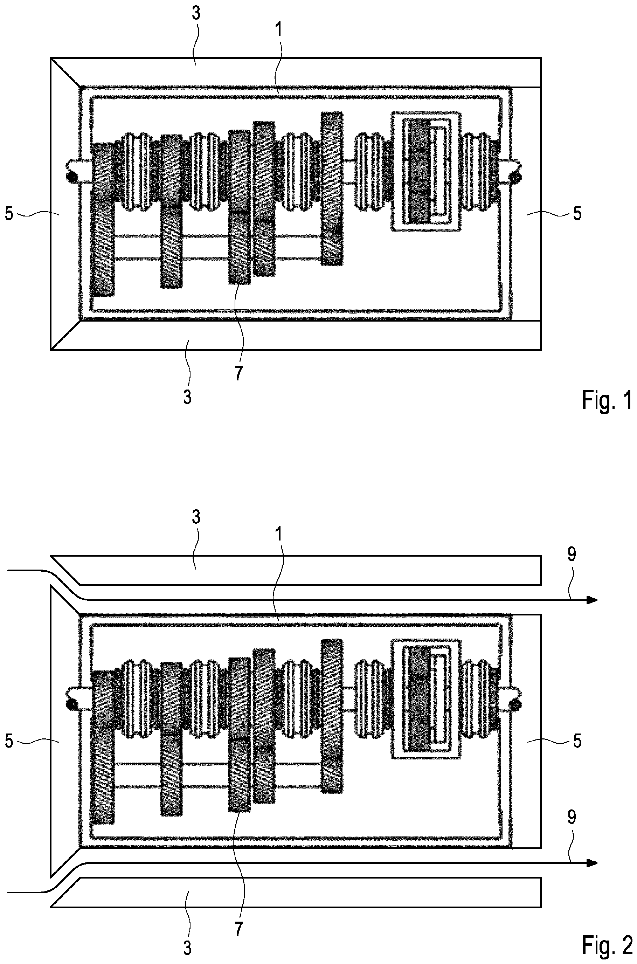

In Figur 1 ist ein Getriebe 1 eines Fahrzeugs dargestellt. Um das Getriebe 1 während einer Warmlaufphase thermisch gegenüber einer Umgebung zu isolieren und, dadurch bedingt, ein schnelles Erwärmen des Getriebes 1 bei bspw. einer Inbetriebnahme zu begünstigen, sind an dem Getriebe 1 bewegliche Isolationselemente 3 und feste Isolationselemente 5 angeordnet.

Die Isolationselemente 3 und 5 bestehen aus Polyurethanschaum und sind einer jeweiligen Oberflächenform des Getriebes 1 nachgebildet, so dass die Isolationselemente 3 und 5 in einer ersten Position formschlüssig an dem Getriebe 1 anliegen und entsprechend kein Luftspalt bzw. keine Luftschicht zwischen den Isolationselementen 3 bzw. 5 und dem Getriebe liegt.

Durch die Isolationselemente 3 und 5 wird beim Bewegen von Zahnrädern 7 des Getriebes 1 abgegebene Wärme größtenteils in dem Getriebe 1 gehalten, da ein Wärmeaustausch zwischen dem Getriebe 1 und einem Umgebungsmedium durch die Isolationselemente 3 und 5 minimiert wird.

In Figur 2 ist das das Getriebe 1 umfassende Fahrzeug nach einer Warmlaufphase in einen Zustand "Kühlungsphase" gewechselt. Dies bedeutet, dass eine Temperatur eines Getriebeöls im Inneren des Getriebes 1 einen vorgegebenen Schwellenwert überschritten hat, so dass das Getriebe 1 gekühlt werden muss, um Schäden an dem Getriebe 1 aufgrund von Überhitzung zu vermeiden. Dazu wurden die beweglichen Isolationselemente 3 mittels eines Elektromotors von der ersten Position, in der die beweglichen Isolationselemente 3 formschlüssig an dem Getriebe 1 anlagen, in eine zweite Position bewegt, in der die beweglichen Isolationselemente 3 beabstandet von dem Getriebe 1 angeordnet sind. Entsprechend werden durch die Bewegung der beweglichen Isolationselemente 3 von der ersten Position in die zweite Position entstandene Räume mit Luft durchströmt, wie durch Pfeile 9 angedeutet.

Durch die in den Räumen zwischen den beweglichen Isolationselementen 3 und dem Getriebe 1 strömenden Luftmassen wird aufgrund einer Bewegung der Zahnräder 7 von dem Getriebe 1 abgegebene Wärme abtransportiert und das Getriebe 1 entsprechend gekühlt.

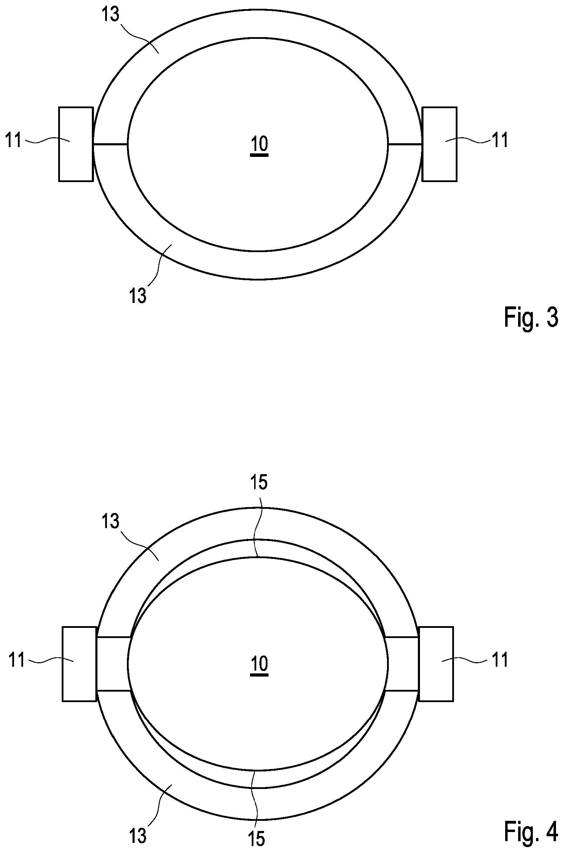

In Figur 3 ist eine Antriebsstrangkomponente in Form einer Radlagerschale 10 dargestellt. Die Radlagerschale 10 wird mittels zweier beweglicher Isolationselemente 13 thermisch gegenüber einer Umgebung isoliert, so dass sich die Radlagerschale 10 bei bspw. einer Inbetriebnahme schnell erwärmt. Mittels mechanischen Stellgliedern 11 können die Isolationselemente 13 bewegt werden. In Figur 3 sind die Isolationselemente 13 in einer ersten Position dargestellt, in der die Isolationselemente 13 formschlüssig an der Radlagerschale 10 anliegen, so dass durch eine Bewegung von Radlagerteilen im Inneren der Radlagerschale 10 abgegebene Wärmeenergie nicht an eine Umgebung der Radlagerschale 10 abgegeben werden kann. Entsprechend erwärmt sich die Radlagerschale 10 sehr schnell, wenn die Isolationselemente 13 in die erste Position bewegt wurden.

In Figur 4 wurden die Isolationselemente 13 mittels der mechanischen Stellglieder 11 in eine zweite Position bewegt, in der die Isolationselemente 13 beabstandet von der Radlagerschale 10 angeordnet sind, so dass zwischen den Isolationselementen 13 und der Radlagerschale 10 ein Spalt entstanden ist. Über den Spalt sind die Isolationselemente 13 in den Bereichen 15 von der Radlagerschale 10 beabstandet, so dass entlang der Bereiche 15 ein Luftstrom strömen kann, der durch Radlagerkomponenten im Inneren der Radlagerschale 10 abgegebene Wärme abtransportiert und die Radlagerschale 10 entsprechend kühlt.

## Patentansprüche

1. Verfahren zum Regeln einer Temperatur mindestens eines Bauteils eines Fahrzeugs, bei dem mindestens ein Isolationselement (3, 13) zum thermischen Isolieren des mindestens einen Bauteils (1, 10) gegenüber einer Umgebung des mindestens einen Bauteils (1, 10) in Abhängigkeit eines aktuellen Zustands des Fahrzeugs von einer ersten Position in mindestens eine zweite Position oder von der mindestens einen zweiten Position in die erste Position bewegt wird, und bei dem das mindestens eine Isolationselement (3, 13) das mindestens eine Bauteil (1, 10) in der ersten Position vollständig kontaktiert, **dadurch gekennzeichnet dass** das mindestens eine Isolationselement (3, 13) in der mindestens einen zweiten Position vollständig beabstandet von dem mindestens einen Bauteil (1, 10) ist und ein vollständiges Umströmen des mindestens einen Bauteils (1, 10) ermöglicht.

2. Verfahren nach Anspruch 1, bei dem das mindestens eine Isolationselement (3, 13) in der mindestens einen zweiten Position einen Luftleitpfad bildet, entlang dessen das mindestens eine Isolationselement (3, 13) anströmende Luft um das mindestens eine Bauteil (1, 10) herum geleitet wird.

3. Verfahren nach einem der voranstehenden Ansprüche, bei dem das mindestens eine Isolationselement (3, 13) mittels eines Aktuators (11) von der ersten Position in die mindestens eine zweite Position oder von der mindestens einen zweiten Position in die erste Position bewegt wird.

4. Verfahren nach einem der voranstehenden Ansprüche, bei dem der aktuelle Zustand des Fahrzeugs in Abhängigkeit einer Temperatur des mindestens einen Bauteils (1, 10) ermittelt wird.

5. Verfahren nach einem der Ansprüche 1 bis 3, bei dem der aktuelle Zustand des Fahrzeugs in Abhängigkeit einer Kühlmitteltemperatur eines Antriebs des Fahrzeugs ermittelt wird.

6. Verfahren nach einem der voranstehenden Ansprüche, bei dem ein Abstand zwischen dem mindestens einen Isolationselement (3, 13) und dem mindestens einen Bauteil (1, 10) dynamisch in Abhängigkeit des aktuellen Zustands des Fahrzeugs eingestellt wird.

7. Verfahren nach einem der voranstehenden Ansprüche, bei dem das mindestens eine Isolationselement (3. 13) in einer Warmlaufphase des Fahrzeugs in die erste Position und in einer Betriebsphase des Fahrzeugs in die mindestens eine zweite Position bewegt wird.

8. Verfahren nach einem der voranstehenden Ansprüche, bei dem das mindestens eine Isolationselement (3, 13) aus einem Material der folgenden Liste an Materialien oder einer Kombination daraus besteht: Schaum, Kunststoff, Metall, Gummi oder Polyurethan.

9. Verfahren nach einem der voranstehenden Ansprüche, bei dem als das mindestens eine Bauteil (1, 10) eine Antriebsstrangkomponente der folgenden Liste an Antriebsstrangkomponenten gewählt wird: Antrieb, Getriebe, Differential, Radlagerträger.

10. Temperaturregelsystem zum Regeln einer Temperatur mindestens eines Bauteils eines Fahrzeugs, mit mindestens einem Isolationselement (3, 13) zum thermischen Isolieren des mindestens einen Bauteils (1, 10) gegenüber einer Umgebung des Bauteils (1, 10), mindestens einem Aktuator (11) zum Bewegen des mindestens einen Isolationselements (3, 13) von einer ersten Position in mindestens eine zweite Position oder von der mindestens einen zweiten Position in die erste Position, und einem Steuergerät, wobei das Steuergerät dazu konfiguriert ist, den mindestens einen Aktuator (11) in Abhängigkeit eines aktuellen Zustands des Fahrzeugs anzusteuern, und wobei das mindestens eine Isolationselement (3, 13) in der ersten Position das mindestens eine Bauteil (1, 10) zumindest in einem vorgegebenen Bereich vollständig kontaktiert, **dadurch gekennzeichnet dass** das mindestens eine Isolationselement (3, 13) in der mindestens einen zweiten Position vollständig oeabstandet von dem mindestens einen Bauteil (1, 10) und ein vollständiges Umströmen des mindestens einen Bauteils ermöglicht, wobei der mindestens eine Aktuator (11) ein Stellglied der folgenden Liste an Stellgliedern ist: Elektromotor, Scherensystem oder Längssteller mit Drehpunkt.

## Claims

1. Method for regulating a temperature of at least one component of a vehicle, in which at least one insulating element (3, 13) for the thermal insulation of the at least one component (1, 10) against an environment of the at least one component (1, 10) depending on an actual state of the vehicle is moved from a first position into at least one second position or from the at least one second position into the first position, and in which the at least one insulating element (3, 13) completely contacts the at least one component (1, 10) in the first position, **characterised in that** the at least one insulating element (3, 13) in the at least one second position is completely distanced from the at least one component (1, 10) and facilitates a complete flowing around of the at least one component (1, 10).

2. Method according to claim 1, in which the at least one insulating element (3, 13) forms in the at least one second position an air pathway along which the air flowing to the at least one insulation element (3, 13) is guided around the at least one component (1, 10).

3. Method according to any of the preceding claims, in which the at least one insulating element (3, 13) is moved by means of an actuator (11) from the first position into the at least one second position or from the at least one second position into the first position.

4. Method according to any of the preceding claims, in which the actual state of the vehicle is determined depending on a temperature of the at least one component (1, 10).

5. Method according to any of claims 1 to 3, in which the actual state of the vehicle is determined depending on a cooling agent temperature of a drive of the vehicle.

6. Method according to any of the preceding claims, in which a distance between the at least one insulating element (3, 13) and the at least one component (1, 10) is set dynamically depending on the actual state of the vehicle.

7. Method according to any of the preceding claims, in which the at least one insulating element (3. 13) is moved in a warm-up phase of the vehicle into the first position and in an operating phase of the vehicle into the at least one second position.

8. Method according to any of the preceding claims, in which the at least one insulating element (3, 13) consists of a material from the following list of materials or a combination thereof: foam, plastic material, metal, rubber or polyurethane.

9. Method according to any of the preceding claims, in which as the at least one component (1, 10) is selected a drivetrain component from the following list of drivetrain components: drive, transmission, differential, wheel bearing support.

10. Temperature regulating system for regulating a temperature of at least one component of a vehicle, having at least one insulating element (3, 13) for the thermal insulation of the at least one component (1, 10) against an environment of the at least one component (1, 10), at least one actuator (11) for moving the at least one insulating element (3, 13) from a first position into at least one second position or from the at least one second position into the first position, and a control device, wherein the control device is configured to control the at least one actuator (11) depending on an actual state of the vehicle, and wherein the at least one insulating element (3, 13) in the first position completely contacts the at least one component (1, 10) at least in a predetermined region, **characterised in that** the at least one insulating element (3, 13) completely spaced from the at least one component (1, 10) at the at least second position and facilitates a complete flowing around of the at least one component, wherein the at least one actuator (11) is an actuating element from the following list of actuating elements: electric motor, scissor system or longitudinal adjuster with fulcrum.

## Revendications

1. Procédé de régulation d'une température d'au moins un composant d'un véhicule, dans lequel au moins un élément d'isolation (3, 13) pour l'isolation thermique de l'au moins un composant (1, 10) par rapport à un environnement de l'au moins un composant (1, 10) est déplacé en fonction d'un état actuel du véhicule d'une première position à au moins une deuxième position ou de l'au moins une deuxième position à la première position, et dans lequel l'au moins un élément d'isolation (3, 13) entre complètement en contact avec l'au moins un composant (1, 10) dans la première position, **caractérisé en ce que** l'au moins un élément d'isolation (3, 13) dans l'au moins une deuxième position est entièrement espacé de l'au moins un composant (1, 10) et permet un contournement complet de l'au moins un composant (1, 10).

2. Procédé selon la revendication 1, dans lequel l'au moins un élément d'isolation (3, 13) dans l'au moins une deuxième position forme un chemin de guidage d'air, le long duquel de l'air affluant l'au moins un élément d'isolation (3, 13) est guidé autour de l'au moins un composant (1, 10).

3. Procédé selon l'une quelconque des revendications précédentes, dans lequel l'au moins un élément d'isolation (3, 13) est déplacé au moyen d'un actionneur (11) de la première position à l'au moins une deuxième position ou de l'au moins une deuxième position à la première position.

4. Procédé selon l'une quelconque des revendications précédentes, dans lequel l'état actuel du véhicule est déterminé en fonction d'une température de l'au moins un composant (1, 10).

5. Procédé selon l'une quelconque des revendications 1 à 3, dans lequel l'état actuel du véhicule est déterminé en fonction d'une température de réfrigérant d'un entraînement du véhicule.

6. Procédé selon l'une quelconque des revendications précédentes, dans lequel un écart entre l'au moins un élément d'isolation (3, 13) et l'au moins un composant (1, 10) est réglé dynamiquement en fonction de l'état actuel du véhicule.

7. Procédé selon l'une quelconque des revendications précédentes, dans lequel l'au moins un élément d'isolation (3. 13) est déplacé dans une phase de chauffage du véhicule dans la première position et dans une phase de fonctionnement du véhicule dans l'au moins une deuxième position.

8. Procédé selon l'une quelconque des revendications précédentes, dans lequel l'au moins un élément d'isolation (3, 13) est en un matériau de la liste suivante de matériaux ou une combinaison de ceux-ci : mousse, plastique, métal, caoutchouc ou polyuréthane.

9. Procédé selon l'une quelconque des revendications précédentes, dans lequel un composant de chaîne cinématique de la liste suivante de composants de chaîne cinématique est choisi en tant que l'au moins un composant (1, 10) : entraînement, transmission, différentiel, support de palier de roue.

10. Système de régulation de température pour la régulation d'une température d'au moins un composant d'un véhicule, avec au moins un élément d'isolation (3, 13) pour l'isolation thermique de l'au moins un composant (1, 10) par rapport à un environnement du composant (1, 10), au moins un actionneur (11) pour le déplacement de l'au moins un élément d'isolation (3, 13) d'une première position à au moins une deuxième position ou de l'au moins une deuxième position à la première position, et un appareil de commande, dans lequel l'appareil de commande est configuré pour commander l'au moins un actionneur (11) en fonction d'un état actuel du véhicule, et dans lequel l'au moins un élément d'isolation (3, 13) dans la première position entre complètement en contact avec l'au moins un composant (1, 10) au moins dans une zone prédéfinie, **caractérisé en ce que** l'au moins un élément d'isolation (3, 13) dans l'au moins une deuxième position est entièrement espacé de l'au moins un composant (1, 10) et permet un contournement complet de l'au moins un composant, dans lequel l'au moins un actionneur (11) est un organe de réglage de la liste suivante d'organes de réglages : moteur électrique, système à ciseaux ou organe de réglage longitudinal avec pivot.
